# DEMANDE DE BREVET EUROPEEN

(11) **EP 1 344 601 A1**
(43) Date de publication de la demande: **17.09.2003**
(21) Numéro de dépôt: 03290526.7
(22) Date de dépôt: 05.03.2003
(51) Int. Cl.: B23Q 3/154

(54) **Dispositif de bridage magnétique**

(30) Priorité: 15.03.2002 FR 0203225
(71) Demandeur: Renault Automation Comau, 78190 Trappes (FR)
(72) Inventeur: Gauthier, Bruno, 75020 Paris (FR); Thurier, Yvan, 94320 Thiais (FR); Rapinel, Hugues, 91700 Saint-Genevieve des Bois (FR)
(74) Mandataire: Lavialle, Bruno

(57) **Abrégé**

Dispositif de bridage magnétique d'une pièce, comprenant un bâti (1) sur lequel sont montés au moins un élément magnétique (3) qui a une face active (7) au travers de laquelle l'élément magnétique (3) émet un champ magnétique et des moyens (9) de déplacement relatif de l'élément magnétique et de la pièce selon une direction perpendiculaire à la face active entre une position de bridage dans laquelle la face active (7) et la pièce sont rapprochées et une position de libération dans laquelle la face active (7) et la pièce sont éloignées, les moyens de déplacement (9) comprenant une came (15) montée sur le bâti pour coulisser selon une direction sensiblement parallèle à la face active entre des première et deuxième positions correspondant respectivement aux positions de bridage et de libération.

## Description

La présente invention concerne un dispositif de bridage magnétique utilisable notamment pour le bridage de pièces en feuille, telle que des tôles de carrosserie automobile, par exemple dans un poste de soudage bord à bord de pièces en feuille.

Il existe de nombreux types de dispositifs de bridage magnétique.

Parmi ceux-ci, on connaît un dispositif de bridage magnétique qui comprend un bâti définissant une surface de support pour la pièce et des éléments magnétiques qui ont une face active au travers de laquelle ils émettent un champ magnétique vers la surface de support et qui sont montés sur le bâti pour coulisser perpendiculairement à la surface de support entre une position de bridage dans laquelle la face active est rapprochée de la surface de support et une position de libération dans laquelle la face active est éloignée de la surface de support. En position de bridage, le champ magnétique que produisent les éléments magnétiques se referme dans la pièce de sorte que la force d'attraction qui en résulte est importante et attire la pièce à maintenir vers la face active. Le déplacement des élément magnétiques de leur position de bridage vers leur position de libération produit une diminution du champ magnétique au niveau de la pièce, et donc de la force d'attraction, suffisante pour que la pièce puisse être dégagée du dispositif de bridage magnétique.

Il est connu de déplacer les éléments magnétiques entre leur deux positions en les soumettant à un fluide sous pression. Les éléments magnétiques sont alors reçus dans des logements du bâti qui ont une extrémité obturée par une plaque formant la surface de support et une extrémité opposée débouchant dans une chambre pourvue de moyens de son raccordement à une source de pression. Cette structure est relativement complexe à réaliser notamment en ce qui concerne l'étanchéité du dispositif.

L'utilisation de moyens plus mécaniques de déplacement serait a priori tout aussi délicate notamment en termes de poids, d'encombrement, de complexité, de résistance aux efforts et à l'usure.

L'invention a pour objet un dispositif de bridage magnétique d'une pièce, comprenant un bâti sur lequel sont montés au moins un élément magnétique qui a une face active au travers de laquelle l'élément magnétique émet un champ magnétique et des moyens de déplacement relatif de l'élément magnétique et de la pièce selon une direction perpendiculaire à la face active entre une position de bridage dans laquelle la face active et la pièce sont rapprochées et une position de libération dans laquelle la face active et la pièce sont éloignées, les moyens de déplacement comprenant une came montée sur le bâti pour coulisser selon une direction sensiblement parallèle à la face active entre des première et deuxième positions correspondant respectivement aux positions de bridage et de libération.

La came permet la réalisation d'un dispositif de bridage ayant une structure résistante, fiable et particulièrement compacte.

Selon un mode de réalisation particulier, le bâti définit un plan de support de la pièce et l'élément magnétique est monté sur le bâti pour émettre un champ magnétique vers le plan de support et pour coulisser perpendiculairement au plan de support entre la position de bridage dans laquelle la face active est rapprochée du plan de support et la position de libération dans laquelle la face active est éloignée du plan de support, la came étant montée sur le bâti pour coopérer avec l'élément magnétique.

Cette structure est particulièrement simple et robuste ; et le nombre d'organes en mouvement pour la commande de l'élément magnétique est limité.

De préférence, l'élément magnétique est relié à l'opposé de la face active à une platine, et la came est disposée entre une surface du bâti et la platine pour former une entretoise d'épaisseur variable, les moyens de déplacement comprenant un élément élastique de rappel de la platine contre la came et la came dans sa première position maintenant l'élément magnétique dans sa position de libération et la came dans sa deuxième position permettant à l'élément magnétique de retourner dans sa position de bridage.

La came reprend ainsi une grande partie des efforts mis en jeu lors des opérations de bridage et de libération.

Avantageusement, la came comprend un coulisseau ayant au moins une rampe formant un chemin de roulement pour un galet monté sur la platine pour pivoter autour d'un axe parallèle à la surface de support et perpendiculaire à la direction de coulissement et, de préférence, le coulisseau a une face sensiblement parallèle à la surface de support et en regard du bâti pour former un chemin de roulement pour au moins un galet monté sur le bâti pour pivoter autour d'un axe parallèle à la surface de support et perpendiculaire à la direction de coulissement.

Ceci permet de limiter les efforts de frottement et l'usure des constituants du dispositif.

Selon une caractéristique particulière, le bâti comprend une plaque en matériau amagnétique pour former le plan de support et, de préférence, la plaque en matériau amagnétique comprend au moins une lumière qui s'étend en regard de l'élément magnétique et qui est obturée par une plaquette en matériau ferromagnétique.

On évite de la sorte que des poussières ou des copeaux puissent s'introduire entre le bâti et les élément magnétiques. Les plaquettes ferromagnétiques assurent ainsi la continuité du circuit magnétique entre les éléments magnétiques et la pièce à maintenir de sorte qu'elles atténuent peu ou pas le champ magnétique fourni par les éléments magnétiques.

De préférence, l'élément magnétique comprend au moins deux plaquettes ferromagnétiques qui sont maintenues espacées l'une de l'autre par un aimant permanent et qui présentent un chant en saillie de l'aimant permanent pour définir la face active.

La pièce à maintenir, en matériau ferromagnétique, constitue un élément ferromagnétique réalisant la fermeture du circuit magnétique entre les plaquettes adjacentes. Cette structure de l'élément magnétique est particulièrement intéressante lorsque les pièces à maintenir sont des feuilles de faible épaisseur car il peut être choisi un entrefer entre les plaquettes étroit tel qu'une ligne de champ sortant des chants des plaques forme un arc suffisamment petit pour ne pas sortir de la pièce en la traversant, de telle manière que la force d'attraction exercée sur la pièce soit maximale.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue en perspective avec coupe transversale selon la ligne I-I de la figure 2 d'un dispositif de bridage magnétique conforme à l'invention,
- la figure 2 est une vue en coupe longitudinale du dispositif de bridage magnétique, les éléments magnétiques étant en position de libération,
- la figure 3 est une vue analogue à la figure 2 du dispositif de bridage magnétique, les éléments magnétiques étant en position de bridage,
- la figure 4 est une vue agrandie d'un élément magnétique de ce dispositif de bridage,
- la figure 5 est une vue partielle en coupe du dispositif selon l'invention montrant plus particulièrement le plan de support et un élément magnétique,
- la figure 6 est une vue analogue à la figure 5 d'une variante de réalisation.

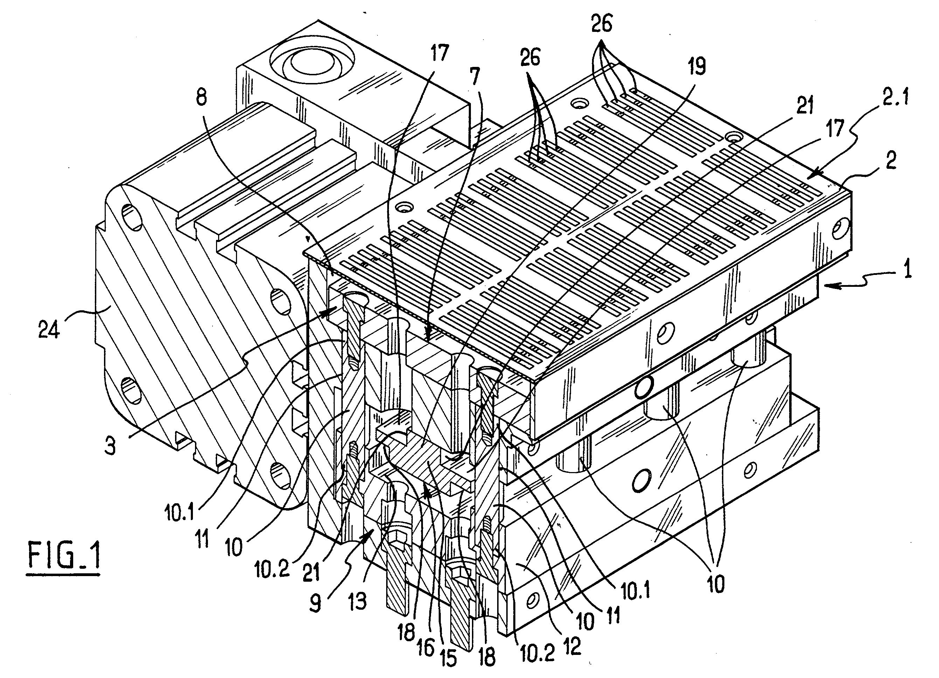

En référence aux figures 1 à 5, le dispositif de bridage magnétique conforme à l'invention comprend un bâti généralement désigné en 1 qui est surmonté d'une plaque 2 ayant une face supérieure 2.1 formant un plan de support sur lequel la pièce à brider en matériau ferromagnétique est destinée à reposer.

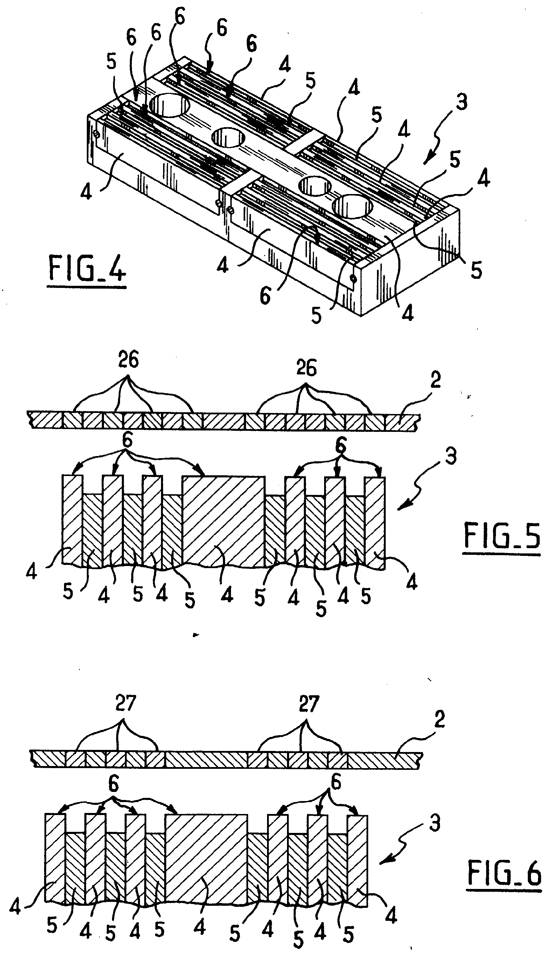

Le dispositif de bridage magnétique comprend également des éléments magnétiques généralement désignés en 3 (représentés schématiquement aux figures 1 à 3 et plus en détail à la figure 4).

Les éléments magnétiques 3 comprennent des plaquettes ferromagnétiques 4 disposées en regard parallèlement les unes aux autres et maintenues espacées les unes des autres par des aimants 5 ici permanents. Les plaques ferromagnétiques 4 ont un chant 6 en saillie par rapport aux aimants permanents 5 pour définir une face active 7 des éléments magnétiques 3. Les plaquettes ferromagnétiques 4 et les aimants 5 sont disposés les uns par rapport aux autres de telle manière que dans chaque paire de plaquettes ferromagnétiques 4 adjacentes, des champs magnétiques de polarités inverses soient créés si bien que les chants 6 de chaque paire de plaquettes ferromagnétiques 4 considérées constituent les pôles inverses d'un aimant produisant un champ magnétique au travers de la face active 7.

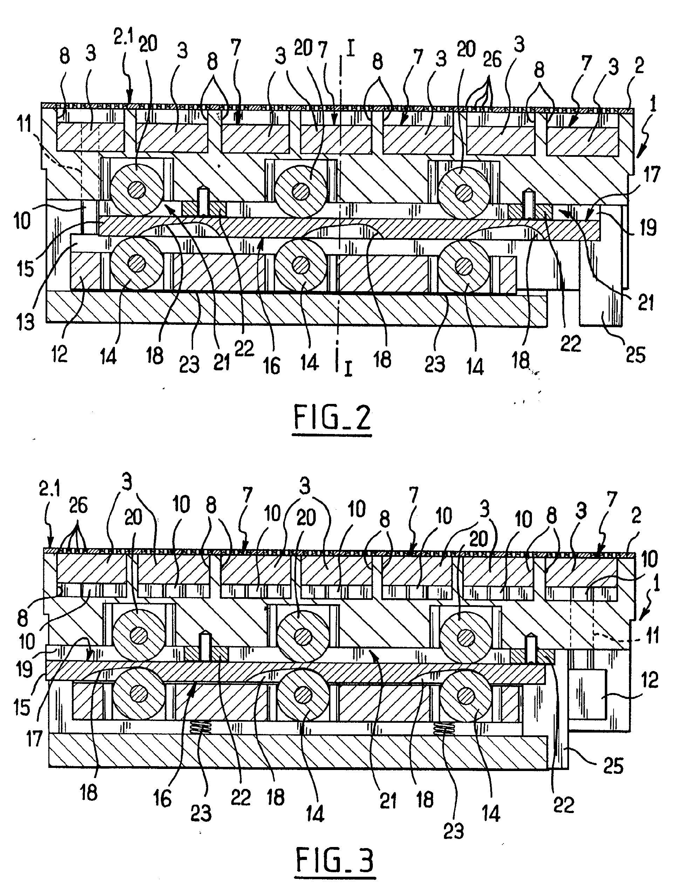

Les éléments magnétiques 3 sont montés dans des logements 8 du bâti 1 débouchant sous la plaque 2 pour coulisser entre une position inactive ou de libération et une position active ou de bridage. En position inactive (représentée à la figure 2), la face active 7 des éléments magnétiques 3 est écartée de la plaque 2 et, en position active (représentée à la figure 3), la face active 7 des éléments magnétiques 3 est attenante à la plaque 2.

On notera en particulier à la figure 5 que la plaque 2 est en matériau amagnétique (par exemple un acier inoxydable) et comprend une lumière en regard de chaque chant 6. Des plaquettes 26 en matériau ferromagnétique (ici fixées par soudage) s'étendent dans les lumières pour obturer celles-ci. Deux plaquettes 26 sont disposées en regard des côtés du chant 6 de cette plaquette centrale (ceci pour des raisons économiques, mais on peut également utiliser une plaquette 26 unique s'étendant sur toute la largeur du chant 6 de cette plaquette ferromagnétique 4 centrale). Ainsi, les plaquettes 26 assurent la continuité du circuit magnétique entre les éléments magnétiques en position active et la pièce à maintenir de sorte que la plaque 2 n'atténue pas ou peu le champ magnétique fourni par les éléments magnétiques 3 en position active. Selon une variante, représentée à la figure 6, la plaque 2 est en matériau ferromagnétique (de l'acier doux par exemple) et comprend des lumières en regard de chaque aimant 5. Des plaquettes 27 en matériau amagnétique s'étendent dans les lumières pour obturer celles-ci. Au lieu d'utiliser des plaquettes 27, les lumières peuvent être obturées en les remplissant par une résine. La résine est avantageusement chargée avec des parties métalliques amagnétiques pour en augmenter la dureté. Ainsi, d'une manière générale, le plan de support pour la pièce comprend ici une partie amagnétique en regard de l'aimant et une partie ferromagnétique en regard de chaque chant des plaquettes en saillie.

Les éléments magnétiques 3 sont associés à des moyens, généralement désignés en 9, de leur déplacement entre leurs positions active et inactive.

Les moyens de déplacement 9 comprennent des colonnes 10 perpendiculaires à la plaque 2 et reçus à coulissement dans des perçages 11 du bâti 1 qui débouchent dans le fond des logements 8. Chaque colonne 10 a une extrémité 10.1 en saillie dans le logement 8 correspondant et sur laquelle est fixé un élément magnétique 3 et une extrémité opposée 10.2 solidaire d'une platine 12 sensiblement parallèle à la plaque 2.

La platine 12 est montée dans un logement du bâti 1 pour être mobile perpendiculairement à la plaque 2 entre une position haute (représentée à la figure 3) et une position basse (représentée à la figuré 2). Le guidage de la platine 12 entre ses deux positions est assuré par les colonnes 10.

La platine 12 comporte une rainure 13 dont l'ouverture longitudinale est orientée vers le haut. Des galets 14 sont montés sur la platine 12 pour pivoter autour d'axes transversaux à la rainure 13 et pour s'étendre légèrement en saillie du fond de la rainure 13.

La rainure 13 reçoit à coulissement un coulisseau 15 qui possède des faces inférieure 16 et supérieure 17.

Des rainures inclinées formant des rampes 18 sont ménagées dans la face inférieure 16 du coulisseau 15 pour constituer des chemins de roulement pour les galets 14.

La face supérieure 17 du coulisseau 15 est divisée en deux parties par une languette longitudinale 19. Chacune des parties de la face supérieure 17 forme un chemin de roulement pour des galets 20 montés sur le bâti 1 pour pivoter autour d'axes transversaux à la rainure 13 et pour s'étendre légèrement en saillie de la paroi supérieure du logement du bâti 1 accueillant la platine 12 et le coulisseau 15.

La languette longitudinale 19 possède deux faces latérales 21 qui forment des chemins de roulement pour des galets 22 montés sur la paroi supérieure du logement accueillant la platine 12 pour pivoter autour d'axes perpendiculaires à la plaque 2. Ces galets assure le guidage du coulisseau entre ses deux positions.

Les moyens de déplacement 9 comprennent également des ressorts 23 intercalés entre le bâti 1 et la platine 12 pour forcer celle-ci dans sa position haute et donc maintenir les galets 14 de la platine 12 contre les rampes 18 de la platine 12 et les parties de la face supérieure 17 du coulisseau 15 contre les galets 20.

Les moyens de déplacement 9 comprennent aussi un vérin 24 (schématisé sur la figure 1) fixé au bâti 1 et dont la tige est parallèle à la direction de coulissement du coulisseau 15 et est reliée à une extrémité de celui-ci par un organe de liaison 25 pour le déplacer entre une première position (visible à la figure 3) dans laquelle le coulisseau 15 permet aux ressorts 23 de repousser la platine 12 dans sa position haute et une deuxième position (visible à la figure 2) dans laquelle le coulisseau 15 maintient la platine 12 dans sa position basse en s'opposant à l'effort exercé par les ressorts 23.

En fonctionnement, la pièce à maintenir est amenée et positionnée sur la face supérieure 2.1 de la plaque 2 alors que les éléments magnétiques 3 sont en position inactive, c'est-à-dire que le coulisseau est dans sa deuxième position (figures 1 et 2). Les galets 14 sont alors reçus dans la partie la moins creuse des rampes 18 (c'est-à-dire située à une faible profondeur par rapport à la face 16) de sorte que la platine 12 est dans sa position basse. Le champ magnétique produit par les éléments magnétiques se referme alors sous la pièce de sorte que la pièce n'est pas bridée.

Le bridage est réalisé par la rétraction de la tige du vérin 24 qui provoque le déplacement du coulisseau 15 dans sa première position (figure 3). Les galets 14 sont alors reçus dans la partie la plus creuse des rampes 18 (c'est-à-dire située à une plus grande profondeur par'rapport à la face 16) de sorte que la platine 12 est dans sa position haute.

Les éléments magnétiques 3 sont alors dans leur position active et la pièce constitue un élément de fermeture du circuit magnétique réalisé par chaque paire de plaquettes ferromagnétiques 4 adjacentes et l'aimant 6 assurant leur liaison. Le champ magnétique ainsi refermé par l'intermédiaire de la pièce réalise une attraction magnétique puissante de la pièce contrer la face supérieure 2.1 de la plaque 2. Comme l'entrefer peut être réduit à une dimension très petite (en l'espèce, 1,5 mm), il est possible de réaliser le plaquage d'une pièce en feuille même lorsque celle-ci est de faible épaisseur sans que le champ magnétique échappe, du fait de sa courbure, à la pièce à immobiliser. Il n'est donc pas nécessaire d'utiliser une quelconque culasse de bridage à rapporter en supplément sur la surface de la pièce P opposée à la surface de support.

La libération de la pièce est obtenue par la sortie de la tige du vérin 24 qui ramène le coulisseau dans sa deuxième position. Lorsque la platine 12 est dans sa position basse, les éléments magnétiques sont dans leur position inactive et le champ magnétique produit par les éléments magnétiques 3 se referme sous la pièce de sorte que la force d'attraction ainsi engendrée n'est pas suffisante pour empêcher de déplacer la pièce par rapport à la face supérieure 2.1. La pièce est ainsi libérée et peut être ôtée du dispositif de bridage.

Le coulisseau 15 constitue donc une came intercalée entre le bâti 1 et la platine 12 pour agir à la manière d'une entretoise ayant une épaisseur qui varie selon la position dans laquelle elle se trouve.

Bien entendu, l'invention n'est pas limitée au mode de réalisation décrit et on peut y apporter des variantes de réalisation sans sortir du cadre de l'invention tel que défini par les revendications.

En particulier, le vérin peut être pneumatique ou hydraulique, ou bien encore être remplacé par tout organe moteur adapté à l'effort à fournir.

De plus, il est possible de réaliser des dispositifs conformes à l'invention en opérant une inversion cinématique du mode de réalisation décrit.

Il est en outre possible de prévoir que les éléments magnétiques soient rigidement fixés au bâti et que des poussoirs soient montés sur le bâti entre les éléments magnétiques pour être mobiles entre une position en saillie du plan de support de la pièce et une position escamotée par rapport au plan de support, la came coopérant alors avec ces poussoirs pour les déplacer entre leurs deux positions.

Par ailleurs, les éléments magnétiques peuvent avoir une structure différente.

Plusieurs dispositifs de bridage peuvent être accolés les uns aux autres. De préférence alors, un seul vérin est utilisé pour déplacer les coulisseaux des dispositifs de bridage. Dans ce cas, le vérin est monté sur un des dispositifs de bridage et la pièce de liaison 25 de ce dispositif de bridage est reliée aux pièces de liaison 25 des autres dispositifs de bridage par une tringlerie.

## Revendications

1. Dispositif de bridage magnétique d'une pièce, comprenant un bâti (1) sur lequel sont montés au moins un élément magnétique (3) qui a une face active (7) au travers de laquelle l'élément magnétique (3) émet un champ magnétique et des moyens (9) de déplacement relatif de l'élément magnétique et de la pièce selon une direction perpendiculaire à la face active entre une position de bridage dans laquelle la face active (7) et la pièce sont rapprochées et une position de libération dans laquelle la face active (7) et la pièce sont éloignées, **caractérisé en ce que** les moyens de déplacement (9) comprennent une came (15) montée sur le bâti pour coulisser selon une direction sensiblement parallèle à la face active entre des première et deuxième positions correspondant respectivement aux positions de bridage et de libération.

2. Dispositif de bridage magnétique selon la revendication 1, **caractérisé en ce que** le bâti (1) définit un plan de support (2) de la pièce et **en ce que** l'élément magnétique (3) est monté sur le bâti (1) pour émettre un champ magnétique vers le plan de support et pour coulisser perpendiculairement au plan de support entre la position de bridage dans laquelle la face active (7) est rapprochée du plan de support (2) et la position de libération dans laquelle la face active (7) est éloignée du plan de support (2), la came (15) étant montée sur le bâti pour coopérer avec l'élément magnétique.

3. Dispositif de bridage magnétique selon la revendication 2, **caractérisé en ce que** l'élément magnétique (3) est relié à l'opposé de la face active à une platine (12), et **en ce que** la came (15) est disposée entre une surface du bâti et la platine pour former une entretoise d'épaisseur variable, les moyens de déplacement (9) comprenant au moins un élément élastique (23) de rappel de la platine contre la came et la came dans sa première position maintenant l'élément magnétique dans sa position de libération et la came dans sa deuxième position permettant à l'élément magnétique de retourner dans sa position de bridage.

4. Dispositif de bridage magnétique selon la revendication 3, **caractérisé en ce que** la platine (12) comporte une rainure (13) recevant à coulissement la came (15).

5. Dispositif de bridage magnétique selon la revendications 3 ou la revendication 4, **caractérisé en ce que** la came comprend un coulisseau (15) ayant au moins une rampe (18) formant un chemin de roulement pour un galet (14) monté sur la platine (12) pour pivoter autour d'un axe parallèle au plan de support (2) et perpendiculaire à la direction de coulissement.

6. Dispositif de bridage magnétique selon l'une quelconque des revendications 3 à 5, **caractérisé en ce que** le coulisseau (15) a une face (17) sensiblement parallèle au plan de support (2) et en regard du bâti (1) pour former un chemin de roulement pour au moins un galet (20) monté sur le bâti pour pivoter autour d'un axe parallèle au plan Se support et perpendiculaire à la direction de coulissement.

7. Dispositif de bridage magnétique selon l'une quelconque des revendications précédentes, **caractérisé en ce que** le bâti (1) est pourvu de galets (22) de guidage disposés pour coopérer avec une surface latérale (21) de la came (15).

8. Dispositif de bridage magnétique selon l'une quelconque des revendications précédentes, **caractérisé en ce que** les moyens de déplacement (9) comprennent un vérin (24) fixé au bâti (1) et pourvu d'une tige reliée à la came (15) pour déplacer celle-ci entre ses deux positions.

9. Dispositif de bridage magnétique selon l'une quelconque des revendications précédentes, **caractérisé en ce que** le bâti (1) comprend une plaque (2) en matériau amagnétique pour former le plan de support.

10. Dispositif de bridage magnétique selon la revendication 9, **caractérisé en ce que** la plaque (2) en matériau amagnétique comprend au moins une lumière qui s'étend en regard de l'élément magnétique (3) et qui est obturée par une plaquette (26) en matériau ferromagnétique.

11. Dispositif de bridage magnétique selon l'une quelconque des revendications précédentes, **caractérisé en ce que** l'élément magnétique (3) comprend au moins deux plaquettes ferromagnétiques (4) qui sont maintenues espacées l'une de l'autre par un aimant permanent (5) et qui présentent un chant (6) en saillie de l'aimant permanent (5) pour définir la face active (7).
